# FASCICULE DE BREVET EUROPEEN

(11) **EP 1 428 081 B1**
(45) Date de publication et mention de la délivrance du brevet: **14.12.2005**
(21) Numéro de dépôt: 02796290.1
(22) Date de dépôt: 06.08.2002
(51) Int. Cl.: G05B 1/00

(54) **DISPOSITIF DE CONTROLE DE L'USURE ET/OU DU BRIS D'OUTIL POUR MACHINE OUTIL**
STEUEREINRICHTUNG FÜR DIE WERKZEUGABNUTZUNG UND/ODER WERKZEUGAUSFALL FÜR EIN MASCHINENWERKZEUG
TOOL WEAR AND/OR BREAKAGE CONTROL DEVICE FOR A MACHINE TOOL

(30) Priorité: 07.08.2001 FR 0110670
(43) Date de publication de la demande: 16.06.2004
(73) Titulaire: Digital Way, 42000 Saint Etienne (FR)
(72) Inventeur: SCHWEITZER, Alain, F-69003 Lyon (FR); PERRIN, Pascale, F-42680 Saint Marcellin en Forez (FR)
(74) Mandataire: Thivillier, Patrick
(86) Numéro de dépôt international: PCT/FR2002/002807
(87) Numéro de publication internationale: WO 2003/019301

(56) Documents cités:
- EP-A- 0 969 340
- WO-A-97/05982
- US-A- 4 207 567
- US-A- 5 857 166

## Description

L'invention se rattache au secteur technique des moyens de mesure des paramètres d'un réseau triphasé, notamment la tension, le courant, le déphasage et la fréquence, en ayant pour objectif de calculer les grandeurs physiques caractéristiques, telles que la puissance active, l'énergie, le couple électrique, les courants actifs, les courants réactifs, ...

Il est notamment apparu important de pouvoir mesurer ces différents paramètres, d'une manière indépendante, pour calculer en conséquence la formule que l'on veut en combinaison avec un logiciel approprié ou autre.

Une solution avantageuse apte à résoudre ce problème ressort de l'enseignement du brevet FR 2.531.077 qui concerne un dispositif de mesure des paramètres d'un réseau triphasé comprenant essentiellement des moyens aptes à mesurer le courant sur au moins une des phases du réseau et des moyens aptes à mesurer les tensions composées pour recréer un neutre artificiel afin d'obtenir les trois tensions simples.

Ce dispositif de mesure trouve une application particulièrement avantageuse pour le contrôle de l'usure et/ou du bris d'un outil d'une machine-outil à moteur triphasé synchrone ou asynchrone notamment. Ce dispositif utilise la mesure de la puissance et de l'énergie absorbées par le moteur d'entraînement de la broche porte-outils afin de connaître l'état desdits outils. En effet, il est apparu que, lorsque deux usinages par exemple sont réalisés dans les mêmes conditions avec des outils identiques, l'énergie absorbée est la même. Par contre, une usure des outils génère une augmentation de l'énergie. Lors d'un cycle d'apprentissage, le dispositif mémorise la puissance instantanée. Pendant les cycles de travail, le dispositif mesure et calcule en temps réel la puissance et l'énergie, et les compare à celles absorbées lors de la phase d'apprentissage. Si la puissance ou l'énergie absorbée en cycle de travail est supérieure à la puissance ou l'énergie mémorisée, avec un coefficient déterminé, cela signifie que le dispositif détecte une usure ou une casse d'outil.

Selon l'état antérieur de la technique, ce dispositif de contrôle d'usure et de bris d'outil, est indépendant des autres éléments ou modules nécessaires à la commande et au pilotage du moteur et à la mesure de certains paramètres électriques.

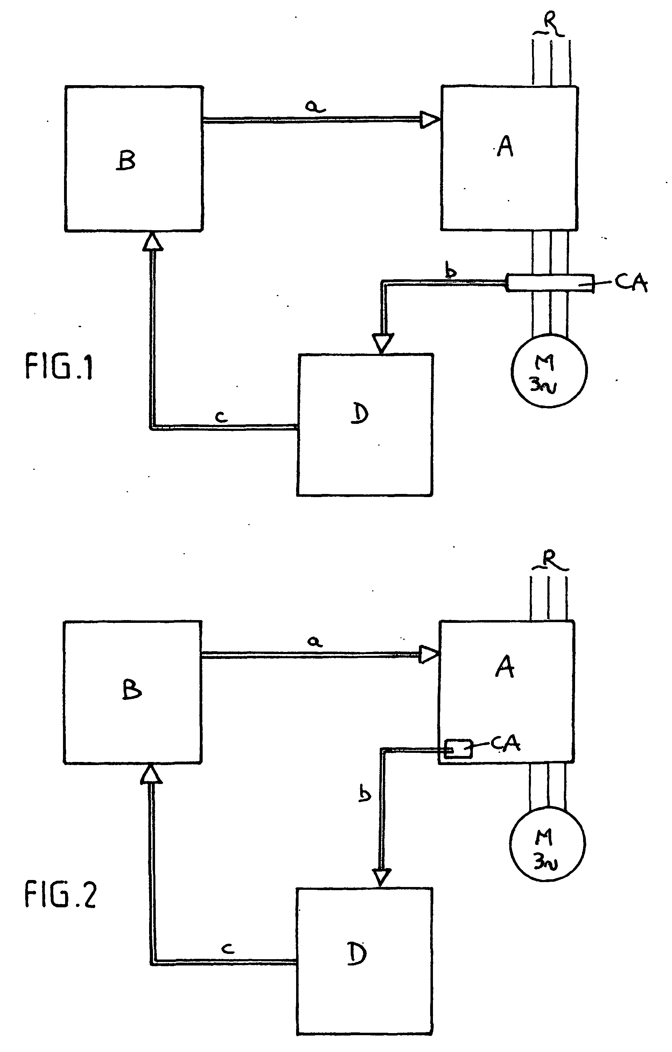

Par exemple, dans la forme de réalisation illustrée figure 1, le moteur (M) est relié au réseau triphasé (R) par l'intermédiaire d'un module (A) présentant, d'une manière parfaitement connue pour un homme du métier, tout système de pilotage tel que variateur de vitesse, convertisseur de fréquence, .... Ce module de pilotage est lui-même assujetti à un module de commande numérique (B) ou autre organe de commande tel qu'un automate via une liaison analogique ou un bus numérique (a). A la sortie du module (A), les trois phases du réseau sont connectées à un système (CA), capteur des mesures électriques (puissance, courant, ...). Le capteur de mesures électriques (CA), via une liaison analogique ou un bus numérique (b), est relié au dispositif de contrôle d'usure et de bris d'outil en tant que tel (D). Le module (D) est relié au module de commande (B) par une liaison filaire ou un bus de terrain (c).

A la figure 2, qui montre une autre forme de réalisation selon l'état antérieur de la technique, le capteur de mesure électrique (CA) n'est plus isolé, mais intégré au module de pilotage du moteur. Par contre, le module (D) relatif au dispositif de contrôle et de bris d'outil, est toujours indépendant.

Le brevet EP 0969340 se propose de réaliser la détection de l'état critique d'un outil sans qu'aucune courbe d'apprentissage ou d'étalonnage ne soit nécessaire au fonctionnement. Dans ce but, on mesure la différence entre la moyenne du courant calculé sur les derniers instants (valeur de consigne dynamique) et la valeur instantanée du courant. Cette différence ainsi établie est alors comparée à une valeur fixe (valeur de consigne) pour détecter l'état critique.

A partir de cet état de la technique, les problèmes que se propose de résoudre l'invention sont de simplifier l'installation et le câblage, de réduire l'encombrement nécessaire à un système de contrôle d'usure et/ou de bris d'outil dans l'armoire électrique, et de supprimer les inconvénients liés à la transmission des mesures entre le capteur et le dispositif de contrôle. Dans ces conditions, il est possible d'augmenter la fiabilité, la rapidité et la précision de l'ensemble constitué par un automate, un contrôleur d'usure et de bris d'outil et un système de mesure électrique, en permettant à l'automate de commande de se brancher directement au système unique : mesure électrique et contrôleur d'usure et/ou de bris d'outil.

Pour résoudre de tels problèmes, il a été conçu et mis au point un dispositif de contrôle d'usure et de bris d'outil pour machine outil, présentant un module de commande et un système de pilotage d'un moteur d'entraînement de l'outil, ledit dispositif qui comprend, dans un module unique traversé entièrement par les trois phases d'alimentation du moteur tous les composants nécessaires aptes à mesurer la puissance active et/ou les courants actifs absorbés par le moteur.

Selon l'invention, le dispositif intègre des moyens de contrôle numérique d'usure, d'absence et de bris d'outil utilisant simultanément la puissance, l'énergie (intégrale de la puissance) et la dérivée de la puissance, afin de détecter, en comparaison avec une courbe de référence établie lors d'un premier usinage effectué par l'outil, tout défaut (casse outil, absence outil, mauvais positionnement pièce ou défaut machine) sur tout type d'usinage, notamment les usinages avec plusieurs outils sur un même moteur, le tournage et les usages sur des pièces brutes.

Ces caractéristiques permettent de détecter tous les cas d'usure, de bris d'outil ou d'absence d'outil.

Compte tenu de l'intégration de la mesure des grandeurs électriques, et du contrôle d'usure et de bris d'outil, il est important que la présence des signaux de puissance au niveau de la mesure, ne perturbent pas le reste, afin de limiter tout risque de dysfonctionnement susceptible de résulter d'une telle compacité.

Pour résoudre un tel problème, le module de mesures électriques et le moyen de contrôle numérique de l'usure et de bris d'outil, sont isolés galvaniquement et/ou électromagnétiquement.

A partir du concept de base de l'invention, qui est de pouvoir intégrer au maximum différentes fonctions :
- soit le système de pilotage du moteur d'entraînement de l'outil et le module de mesures électriques et de contrôle de l'usure et du bris d'outil, sont intégrés dans un même ensemble ;
- soit le module de commande et le module de mesures électriques et de contrôle de l'usure et du bris d'outil, sont intégrés dans un même ensemble ;
- soit le module de commande, le système de pilotage du moteur d'entraînement de l'outil et le module de mesures électriques et de contrôle de l'usure et du bris d'outil, sont intégrés dans un même ensemble.

L'invention est exposée ci-après plus en détail à l'aide des figures annexées dans lesquelles :
- la figure 1 est un synoptique montrant la commande, le contrôle et la mesure des grandeurs électriques d'un moteur selon l'état antérieur de la technique ;
- la figure 2 est une vue semblable à la figure 1 montrant une autre solution selon l'état antérieur de la technique ;

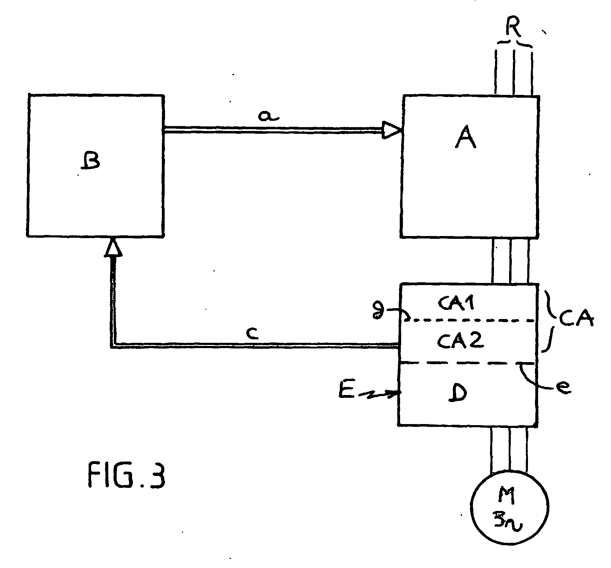

- la figure 3 est un synoptique montrant la commande, le contrôle et la mesure de certaines grandeurs électriques d'un moteur selon une caractéristique à la base du dispositif de l'invention.

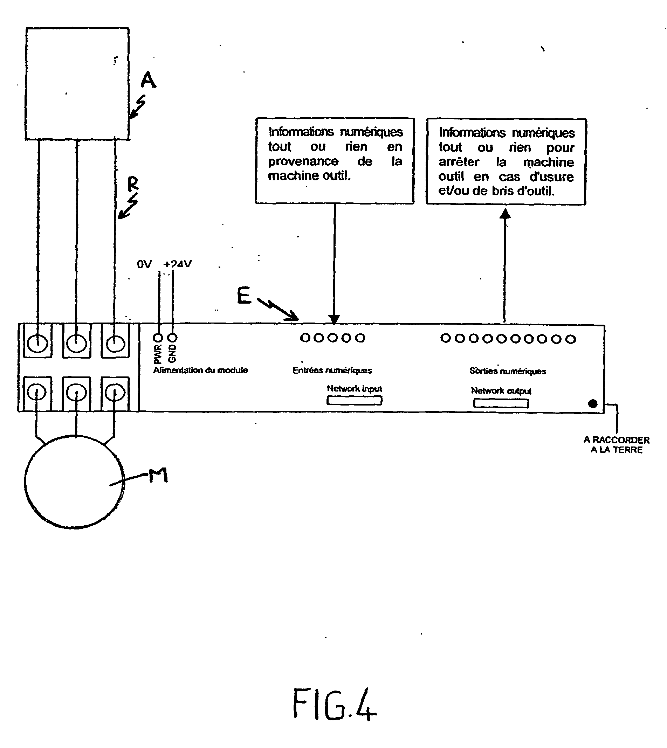

- La figure 4 montre plus particulièrement le module unique apte à détecter l'usure et/ou le bris d'outils d'une broche de machine outil par exemple.
   Comme le montre la figure 1, le dispositif selon l'invention comprend un module (A) constituant le système de pilotage du moteur (M) en intégrant par exemple un variateur de vitesse, un convertisseur de fréquence, ... Le moteur (M) constitue par exemple le moteur d'entraînement d'une broche de machine outil.
   Comme indiqué, d'une manière connue, ce module (A) est assujetti au module (B) de commande numérique ou autre système de commande tel qu'un automate programmable. La liaison entre les modules (A) et (B) s'effectue par un bus numérique ou une liaison analogique (a).
   Selon l'invention, à la sortie du module (A), le réseau triphasé (R) d'alimentation du moteur (M) est intercepté par un module (E) intégrant un moyen de mesure des grandeurs électriques (CA) (puissance, courant, ...) et un moyen numérique de contrôle de l'usure et du bris d'outil (D) en comparaison avec une courbe de puissance d'apprentissage établie lors d'une première opération effectuée par un outil commandé par le moteur (M).
   Le module (E) est relié au module de commande (B) par un bus de terrain ou une liaison filaire (c).
   Il en résulte donc une intégration dans le module (E) des fonctions de mesure des grandeurs électriques et de contrôle numérique d'usure et de bris d'outil.
   Compte tenu de cette intégration, il a fallu résoudre le problème posé, d'éviter que la présence des signaux triphasés de puissance de pilotage du moteur, perturbe la fonction contrôle. Dans ce but, le système (CA) apte à effectuer les mesures et à les numériser a été conçu en deux parties (CA1) et (CA2) isolées galvaniquement entre elles (g).
- L'acquisition (CA1) des grandeurs analogiques courants et tensions par des dispositifs adéquats comme par exemple des shunts pour les courants et des ponts de résistances pour les tensions.
- L'amplification, la mise en forme et la numérisation (CA2) des signaux en vue de leur exploitation pour le contrôle d'usure et de bris d'outil.

Les signaux électriques numérisés étant isolés galvaniquement du réseau triphasé de puissance, les seules perturbations que peut recevoir le contrôle numérique d'usure et de bris d'outil (D), sont d'origine électromagnétique et créées par les fortes variations de courant qui peuvent apparaître lors du pilotage du moteur.

Pour s'en affranchir, deux méthodes ont été mises en place :
- Un écran électromagnétique (e) a été inséré entre le module de mesure (CA) et le contrôle (D) ;
- L'utilisation d'un microcontrôleur au lieu d'un microprocesseur immunise le système aux perturbations électromagnétiques. Ceci est dû au fait de l'intégration du processeur, de la mémoire programme et de la pile utilisateur dans le même composant électronique.

A partir de ce concept de base, les modules (A) et (E) peuvent être intégrés dans un même ensemble. Il en est de même en ce qui concerne les modules (B) et (E) qui peuvent être intégrés dans un même ensemble. Enfin, selon une autre forme de réalisation, pour une intégration totale, les modules (A), (B) et (E) sont intégrés dans un même ensemble.

La suppression de tout élément entre la partie mesure et traitement (du type réseau informatique, liaison filaire...) augmente la qualité des mesures de puissance et/ou de courant (vitesse d'échantillonnage accrue, suppression des parasites de transmission....). Bénéficiant de cet avantage, il est alors possible d'exploiter une autre grandeur physique : la dérivée de la puissance et/ou du courant.

Jusqu'à présent, les contrôles d'usure et de bris d'outil détectent l'usure et l'absence d'outil par la mesure de l'énergie, la casse et l'absence d'outil par la mesure de puissance.

Cependant, la surveillance des outils à plaquettes (fraise, alésoir) ou des têtes multi-outils (10 forets entraînés par le même moteur) utilisant uniquement l'énergie et la puissance, n'est pas assez fiable pour détecter la casse d'une plaquette ou d'un outil.

La combinaison simultanée du contrôle par la puissance, l'énergie et la dérivée améliore notablement la détection d'usure et/ou de bris d'outil.

L'avantage de la dérivée ressort pour l'alésage avec outil complexe, le perçage et le taraudage avec tête multi-outils qui sont autant d'opérations où la casse d'un outil ne provoque qu'une faible variation de la puissance. Cet avantage ressort également dans le cas du fraisage et du tournage sur pièces brutes, dont l'amplitude de la puissance absorbée varie beaucoup d'une pièce à l'autre. Le contrôle dérivé utilisé, amplifie les petites variations rapide de la puissance (casse d'une seule plaquette sur une fraise, casse d'un outil sur une tête multi-outils,....) et élimine les variations dues aux écarts de brut. La dérivée permet ainsi une détection fiable de la casse d'outils ou de plaquettes sur ces usinages.

En revanche, l'utilisation de la dérivée avec un seul des deux autres contrôles (puissance ou énergie) n'est pas suffisant pour détecter tous les cas d'usure, de bris ou d'absence. C'est uniquement la combinaison des trois contrôles simultanément qui assure la fiabilité des détections.

Les avantages ressortent bien de la description.

## Revendications

1. Dispositif de contrôle d'usure et/ou de bris d'outil pour machine-outil, présentant un module de commande (B) et un système de pilotage (A) d'un moteur d'entraînement (M) de l'outil, ledit dispositif qui comprend, dans un module unique (E) traversé entièrement par les trois phases d'alimentation du moteur (M), tous les composants nécessaires aptes à mesurer la puissance active et/ou les courants actifs absorbés par le moteur,
est **caractérisé en ce qu'**il intègre des moyens de contrôle numérique d'usure, d'absence et de bris d'outil utilisant simultanément la puissance, l'énergie (intégrale de la puissance) et la dérivée de la puissance, afin de détecter, en comparaison avec une courbe de référence établie lors d'un premier usinage effectué par l'outil, tout défaut (casse outil, absence outil, mauvais positionnement pièce ou défaut machine) sur tout type d'usinage, notamment les usinages avec plusieurs outils sur un même moteur, le tournage et les usages sur des pièces brutes.

2. Dispositif selon la revendication 1, **caractérisé en ce que** dans le module (E), les mesures électriques et le moyen de contrôle de l'usure et du bris d'outil, sont isolés galvaniquement et/ou électromagnétiquement.

3. Dispositif selon la revendication 1, **caractérisé en ce que** le système de pilotage (A) du moteur d'entraînement de l'outil et le module (E) de mesure électrique et de contrôle de l'usure et du bris d'outil, sont intégrés dans un même ensemble.

4. Dispositif selon la revendication 1, **caractérisé en ce que** le module de commande (B) et le module (E) de mesure électrique et de contrôle de l'usure et du bris d'outil, sont intégrés dans un même ensemble.

5. Dispositif selon la revendication 1, **caractérisé en ce que** le module de commande (B), le système de pilotage (A) du moteur d'entraînement de l'outil et le module (E) de mesure électrique et de contrôle de l'usure et du bris d'outil, sont intégrés dans un même ensemble

## Patentansprüche

1. Vorrichtung zur Kontrolle von Verschleiß und/oder Bruch eines Werkzeugs für eine Werkzeugmaschine, mit einem Steuermodul (B) und einem Ansteuersystem (A) eines Antriebsmotors (M) des Werkzeugs, welche Vorrichtung in einem einzigen, vollständig von den drei Versorgungsphasen des Motors (M) durchlaufenen Modul (E) alle notwendigen Komponenten enthält, die geeignet sind, um die aktive Leistung und/oder die von dem Motor aufgenommenen aktiven Ströme zu messen, **dadurch gekennzeichnet, dass** sie digitale Kontrolleinrichtungen für Verschleiß, Fehlen und Bruch des Werkzeugs integriert, die gleichzeitig die Leistung, die Energie (Integral der Leistung) und die Ableitung der Leistung nutzen, um im Vergleich mit einer bei einer ersten mit dem Werkzeug durchgeführten Bearbeitung aufgestellten Referenzkurve jeden Fehler (Werkzeugbruch, Werkzeugfehlen, schlechte Werkstückpositionierung oder Maschinenfehler) bei einem beliebigen Typ von Bearbeitung, insbesondere den Bearbeitungen mit mehreren Werkzeugen an einem gleichen Motor, der Drehbearbeitung und den Anwendungen an Rohteilen zu erfassen.

2. Vorrichtung nach Anspruch 1, **dadurch gekennzeichnet, dass** in dem Modul (E) die elektrischen Messungen und die Einrichtung zur Kontrolle des Werkzeugverschleißes und - bruchs galvanisch und/oder elektromagnetisch isoliert sind.

3. Vorrichtung nach Anspruch 1, **dadurch gekennzeichnet, dass** das Ansteuersystem (a) des Antriebsmotors des Werkzeugs und das Modul (E) zur elektrischen Messung und Kontrolle des Werkzeugbruchs und -verschleißes in einer gleichen Anordnung integriert sind.

4. Vorrichtung nach Anspruch 1, **dadurch gekennzeichnet, dass** das Steuermodul (B) und das Modul (E) zur elektrischen Messung und Kontrolle von Werkzeugbruch und -verschleiß in einer gleichen Anordnung integriert sind.

5. Vorrichtung nach Anspruch 1, **dadurch gekennzeichnet, dass** das Steuermodul (B), das Ansteuermodul (A) des Antriebsmotors des Werkzeugs und das Modul (E) zur elektrischen Messung und Kontrolle von Werkzeugbruch und -verschleiß in einer gleichen Anordnung integriert sind.

## Claims

1. A tool wear and/or tool breakage monitoring device for a machine tool, having a control module (B) and a regulating system (A) for a tool drive motor, said device which comprises, in a single module (E) completely crossed by the three phase conductors of the motor (M), all the necessary components capable of measuring the active power and/or the active currents absorbed by the motor,
is **characterised in that** it includes digital means of monitoring tool wear, tool absence and tool breakage that simultaneously use the power, energy (power integral) and the power derivative in order to detect, in comparison with a reference curve established during initial machining performed by the tool, any fault (tool breakage, tool absence, incorrect positioning of the workpiece or machine fault) for any type of machining, especially machining involving several tools driven by a single motor, turning and machining of blanks.

2. A device as claimed in claim 1, **characterised in that**, in module (E), the electrical measurements and the means of monitoring tool wear and breakage are galvanically and/or electromagnetically isolated.

3. A device as claimed in claim 1, **characterised in that** the regulating system (A) of the tool drive motor and the electrical measurement and tool wear and tool breakage monitoring module (E) are integrated in a single assembly.

4. A device as claimed in claim 1, **characterised in that** the control module (B) and the electrical measurement and tool wear and tool breakage monitoring module (E) are integrated in a single assembly.

5. A device as claimed in claim 1, **characterised in that** the control module (B), the regulating system (A) of the tool drive motor and the electrical measurement and tool wear and tool breakage monitoring module (E) are integrated in a single assembly.
